# EUROPÄISCHE PATENTSCHRIFT

(11) **EP 2 844 482 B1**
(45) Veröffentlichungstag und Bekanntmachung des Hinweises auf die Patenterteilung: **18.05.2016**
(21) Anmeldenummer: 13712530.8
(22) Anmeldetag: 22.03.2013
(51) Int. Cl.: B41F 31/30, B41F 31/32, B41F 13/30, B41F 13/38, B41F 30/00, B23P 19/04, B23P 19/10

(54) **VERFAHREN FÜR DIE PARALLELE AUSRICHTUNG VON WENIGSTENS ZWEI ZYLINDERN ZUEINANDER**
METHOD FOR ALIGNING AT LEAST TWO CYLINDERS IN A PARALLEL MANNER RELATIVE TO EACH OTHER
PROCÉDÉ PERMETTANT D'ALIGNER AU MOINS DEUX CYLINDRES PARALLÈLEMENT L'UN À L'AUTRE

(30) Priorität: 02.05.2012 DE 102012103853
(43) Veröffentlichungstag der Anmeldung: 11.03.2015
(73) Patentinhaber: Windmöller & Hölscher KG, 49525 Lengerich/Westf. (DE)
(72) Erfinder: KOBUSCH, Udo, 49163 Bohmte (DE); EHRENBERG, Rainer, 49205 Hasbergen (DE); HÖWELMEYER,Uwe, 49477 Ibbenbüren (DE); WESTHOF, Frank, 49509 Recke (DE); KRÜMPELMANN, Martin, 49525 Lengerich (DE); GUNSCHERA, Frank, 49078 Osnabrück (DE)
(86) Internationale Anmeldenummer: PCT/EP2013/056132
(87) Internationale Veröffentlichungsnummer: WO 2013/164132

(56) Entgegenhaltungen:
- EP-A1- 2 085 223
- EP-A1- 2 100 732
- WO-A2-2010/142405

## Beschreibung

Die vorliegende Erfindung betrifft ein Verfahren für die parallele Ausrichtung von wenigstens zwei Zylindern zueinander sowie eine Kalibriervorrichtung für die parallele Ausrichtung von wenigstens einem Zylinder relativ zu einem anderen Zylinder.

Verfahren für die Ausrichtung von wenigstens zwei Zylindern sind grundsätzlich bekannt. In der WO 2010/142405 A2 wird ein solches Verfahren grundsätzlich offenbart. Sie werden zum Beispiel bei Druckmaschinen, insbesondere bei Rotationsdruckmaschinen, eingesetzt, um die Achsen der einzelnen Zylinder relativ zueinander parallel auszurichten. Das parallele Ausrichten soll als Null-Position der Zylinder zueinander dienen, um anschließend ein gezieltes Einstellen der Abstände beziehungsweise der Winkel der einzelnen Achsen der Zylinder zueinander zu ermöglichen. Bei bekannten Verfahren wird für die parallele Ausrichtung der Zylinder zueinander häufig eine manuelle Parallelitätslehre verwendet. Diese wird manuell zwischen zwei Zylinder eingesetzt und verschoben, um auf diese Weise die parallele Ausrichtung der beiden Zylinder zueinander durchzuführen. Auch ist es bereits aus der EP 2 100 732 A1 bekannt, dass aufwendige Kalibriervorrichtungen eingesetzt werden, welche einem der beiden Zylinder aufgesetzt sind. Diese Kalibriervorrichtungen sind mit Sensoren versehen, die den Abstand zum benachbarten Zylinder erkennen, bestimmen beziehungsweise messen können.

Nachteilhaft bei bekannten Verfahren beziehungsweise bei bekannten Kalibriervorrichtungen ist es, dass bei manuellen Kalibriervorgängen ein hoher Aufwand betrieben werden muss. Bei Verfahren, welche hoch automatisierte beziehungsweise mit aufwendigen Sensoren bestückte Kalibriervorrichtungen verwenden, ist ein hoher Aufwand für die Herstellung der Kalibriervorrichtung, wie auch für die Anordnung der Kalibriervorrichtung zu verwenden. Insbesondere ist die Verkabelung und Stromversorgung der Sensorik einer solchen Kalibriervorrichtung störend und problematisch.

Es ist Aufgabe der vorliegenden Erfindung, die voranstehend beschriebenen Nachteile zumindest teilweise zu beheben. Insbesondere ist es Aufgabe der vorliegenden Erfindung, ein Verfahren für die parallele Ausrichtung von wenigstens zwei Zylindern zueinander sowie eine Kalibriervorrichtung für die parallele Ausrichtung von wenigstens einem Zylinder einer Druckmaschine relativ zu einem anderen Zylinder zur Verfügung zu stellen, welche in kostengünstiger und vor allem einfacher Weise die entsprechende parallele Ausrichtung ermöglichen können.

Voranstehende Aufgabe wird gelöst durch ein Verfahren mit den Merkmalen des Anspruchs 1 sowie durch eine Kalibriervorrichtung mit den Merkmalen des Anspruchs 10. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Kalibriervorrichtung und jeweils umgekehrt, so dass bezüglich der Offenbarung zu den einzelnen Erfindungsaspekten stets wechselseitig Bezug genommen wird beziehungsweise werden kann.

Ein erfindungsgemäßes Verfahren dient der parallelen Ausrichtung von wenigstens zwei Zylindern zueinander gemäß den Merkmalen von Anspruch 1. Bei einem erfindungsgemäßen Verfahrenerfolgt in einem ersten Schritt eine Rotation und eine parallele Verschiebung des Zylinders auf den anderen Zylinder zu für eine Ausrichtung eines ersten Endes des Zylinders. Im zweiten Schritt erfolgt eine Rotation und eine Verschiebung des zweiten Endes des Zylinders auf den anderen Zylinder zu für eine Ausrichtung des zweiten Endes des Zylinders. Bei einem erfindungsgemäßen Verfahren sind also zumindest zwei voneinander separate Schritte vorgesehen.

Beim ersten Schritt erfolgt eine parallele Verschiebung des einen Zylinders, während beim zweiten Schritt eine singuläre Verschiebung eines Endes des Zylinders und damit ein Verkippen der Achse des Zylinders zur Achse des benachbarten Zylinders erfolgt. Darauf hinzuweisen ist, dass in beiden Schritten eine Rotation des Zylinders um seine Rotationsachse erfolgt. Diese Rotation kann sowohl gleichzeitig, also während der Verschiebung, als auch unabhängig von der Verschiebung, insbesondere schrittweise erfolgen. So ist es demnach auch möglich, dass eine Rotation des zu verschiebenden Zylinders um 360° erfolgt und erst anschließend die entsprechende parallele Verschiebung oder die Verschiebung des zweiten Endes durchgeführt wird. In beiden Fällen wird durch die Kombination der beiden Schritte mit einer Verschiebung und einer Rotation ein Erkennen einer Berührung des jeweiligen Zylinders mit dem anderen Zylinder ermöglicht. Dies führt dazu, dass im ersten Schritt durch die parallele Verschiebung eines der beiden Enden eine Berührung mit dem anderen Zylinder durchführen wird. In dieser Position wird der Zylinder entweder gehalten oder für eine weitere einfachere Rotation wieder ein Stück parallel zurück von dem anderen Zylinder wegbewegt.

Anschließend wird der zweite Schritt durchgeführt, in welchem keine parallele Verschiebung, sondern nur eine Verschiebung des gegenüberliegenden zweiten Endes des Zylinders auf den anderen Zylinder zu erfolgt. Auch hier erfolgt gleichzeitig oder schrittweise zusätzlich eine Rotation des Zylinders um seine Rotationsachse. So wird sichergestellt, dass schrittweise oder kontinuierlich auch hier nach einem bestimmten Weg das zweite Ende des Zylinders den anderen Zylinder berührt. Auch diese Berührung wird erkannt und entweder der Zylinder in dieser Position belassen oder um einen vordefinierten Weg, vorzugsweise um den gleichen Weg, von dem anderen Zylinder wegbewegt.

Zusammenfassend ist ein erfindungsgemäßes Verfahren dahingehend so ausgebildet, dass durch die parallelen Verschiebungen des Zylinders im ersten Schritt das erste Ende ausgerichtet wird, während durch die Verschiebung des zweiten Endes im zweiten Schritt das zweite Ende ausgerichtet wird. Im ersten Schritt erfolgt also die parallele Verschiebung zur Annäherung der Achsen der beiden Zylinder, während im zweiten Schritt das Kippen der Achse des Zylinders zur Achse des anderen Zylinders erfolgt, so dass hier die gewünschte Parallelität hergestellt wird. Neben der reinen Parallelität erfolgt jedoch durch eine Berührung der beiden Zylinder miteinander am Ende der beiden Schritte eine Definition beziehungsweise eine Kalibrierung hinsichtlich des Abstands der beiden Zylinder. So kann hinsichtlich Parallelität, aber vorzugsweise auch hinsichtlich des Abstands der beiden Zylinder beziehungsweise der beiden Zylinderachsen, ein neuer Null-Punkt gesetzt werden, von welchem als Kalibrierungsergebnis die zukünftigen Verstellungen der beiden Zylinder relativ zueinander ausgehen können.

Bei einem erfindungsgemäßen Verfahren muss kein manueller Eingriff mehr durchgeführt werden. Manuelle Parallelitätslehren sind auf diese Weise nicht mehr notwendig. Auch müssen keine aufwendigen Kalibriervorrichtungen mit teurer und komplexer Sensorik Verwendung finden. Vielmehr kann durch die Rotation und Verschiebung der Zylinder zueinander ein Rückgriff auf bereits bestehende Antriebe (Stellantriebe und Rotationsantriebe) erfolgen, und somit automatisch ein erfindungsgemäßes Ausrichtverfahren durchgeführt werden. Zusätzliche Verkabelung und/oder zusätzliche Sensorik ist bei der Durchführung eines erfindungsgemäßen Verfahrens nicht notwendig. Ein erfindungsgemäßes Verfahren wird vorzugsweise für Zylinder einer Druckmaschine, insbesondere einer Rotationsdruckmaschine beziehungsweise einer Flexodruckmaschine eingesetzt.

Es kann vorteilhaft sein, wenn bei einem erfindungsgemäßen Verfahren wenigstens ein Zylinder relativ zu einem anderen Zylinder in Form einer Gegendruckwalze parallel ausgerichtet wird. Dies ist insbesondere dann von Vorteil, wenn das erfindungsgemäße Verfahren bei einer Druckmaschine, insbesondere bei einer Rotationsdruckmaschine beziehungsweise bei einer Flexodruckmaschine eingesetzt wird. Die Gegendruckwalze kann dabei eine Walze sein, welche den Gegendruck für eine Vielzahl sogenannter Farbwerke aufbringt, so dass eine Vielzahl einzelner Zylinder, zum Beispiel einzelner Formatwalzen beziehungsweise einzelner Rasterwalzen, relativ parallel zu der gemeinsamen Gegendruckwalze ausgerichtet werden können.

Bei einem erfindungsgemäßen Verfahren wird eine Kalibriervorrichtung verwendet, aufweisend einen Wesentlichen hohlzylindrischen Kalibrierkörper. An den beiden Enden des hohlzylinderischen Kalibrierkörpers ist jeweils eine radiale Erhebung angeordnet, die zueinander in Umfangsrichtung des Zylinders versetzt sind. Eine solche Kalibriervorrichtung ist vorzugsweise auf einem der beiden Zylinder, welche zueinander ausgerichtet werden sollen, angeordnet. Eine solche hohlzylinderische Ausbildung kann zum Aufschieben einer solchen Kalibriervorrichtung auf einen der beiden Zylinder dienen. Die Erhebungen sind an den äußersten Enden der Kalibriervorrichtung angebracht, wobei die Kalibriervorrichtung insbesondere eine Erstreckung entlang der Längsachse der hohlzylinderischen Ausbildung aufweist, welche der maximalen Druckbreite des jeweiligen Zylinders entspricht oder im Wesentlichen entspricht. Mit anderen Worten sind die beiden Erhebungen vorzugsweise an den äußersten Enden des Druckbereichs der maximalen Druckbreite angeordnet. Die Erhebungen erstrecken sich, bezogen auf den zylindrischen Kalibrierkörper radial nach außen, so dass ein größerer Durchmesser durch die Erhebungen vorgegeben wird. Eine solche Kalibriervorrichtung wird vorzugsweise aus einem Kunststoffmaterial oder aus Metall gefertigt, so dass eine entsprechende Genauigkeit bei der Herstellung der Dimensionierung der Erhebungen gewährleistet werden kann.

Ein erfindungsgemäßes Verfahren lässt sich dahingehend weiterbilden, dass die folgenden Schritte durchgeführt werden:
- Rotieren eines Zylinders und parallele Verschiebung des Zylinders auf einen anderen Zylinder, insbesondere eine Gegendruckwalze zu,
- Erkennen der Berührung einer der beiden Erhebungen mit dem anderen Zylinder, insbesondere der Gegendruckwalze,
- Parallele Verschiebung des Zylinders von dem anderen Zylinder, insbesondere der Gegendruckwalze, weg, um einen vordefinierten Weg,
- Rotieren des Zylinders und Verschiebung des Endes des Zylinders auf den anderen Zylinder, insbesondere die Gegendruckwalze, zu, welche gegenüber der Erhebung der erkannten Berührung liegt,
- Erkennen der Berührung der anderen der beiden Erhebungen mit dem anderen Zylinder, insbesondere der Gegendruckwalze,
- Verschiebung des Endes des Zylinders, welches gegenüber der Erhebung der zuerst erkannten Berührung liegt, von dem anderen Zylinder, insbesondere der Gegendruckwalze weg, um einen vordefinierten Weg.

Selbstverständlich können die Rückverschiebungen um den vordefinierten Weg sowohl in paralleler Weise, als auch mit Bezug auf das andere Ende des Zylinders auch nur optional durchgeführt werden. Selbstverständlich ist ein erfindungsgemäßes Verfahren auch ohne diese beiden Rückbewegungsschritte möglich. Diese beiden Rückbewegungsschritte erleichtern die anschließende Durchführung der Rotation des Zylinders, da auf diese Weise ein Anschlagen der Erhebung der erkannten Berührung an dem bereits ausgerichteten Ende vermieden wird.

Bei einem erfindungsgemäßen Verfahren ist eine Kalibriervorrichtung auf einem der beiden Zylinder aufgesetzt. Diese Kalibriervorrichtung ist ausgebildet, wie sie weiter oben bereits erläutert worden ist. Durch die beiden Erhebungen wird die Erkennung wie folgt durchgeführt. So sind die Erhebungen zueinander in Umfangsrichtung der Kalibriervorrichtung versetzt. Ist diese Kalibriervorrichtung um einen der beiden Zylinder gelegt, so kann dieser Zylinder rotiert werden. Wird entweder gleichzeitig mit oder anschließend an eine volle Umdrehung von 360° anschließend dieser Zylinder auf den anderen Zylinder, insbesondere die Gegendruckwalze, zubewegt, so wird nach einer bestimmten Anzahl von parallelen Verschiebeschritten beziehungsweise nach dem Zurücklegen eines ausreichenden Verschiebeweges eine der beiden Erhebungen an dem anderen Zylinder, insbesondere an der Gegendruckwalze, anschlagen. Dadurch, dass die beiden Erhebungen der Kalibriervorrichtungen in Umfangsrichtung zueinander versetzt angeordnet sind, wird aus der aktuellen Rotationsstellung des rotierten Zylinders geschlossen, welche der beiden Erhebungen diesem Anschlag zugrunde liegt.

Sind die beiden Erhebungen zueinander im Wesentlichen um 180° versetzt angeordnet, so würde eine Rotationsposition des Zylinders innerhalb der ersten 180° der Rotation der Berührung der ersten Erhebung und innerhalb der zweiten 180° der Rotation der zweiten Erhebung entsprechen. Somit wird nicht nur grundsätzlich die Berührung und damit ein vordefinierter Abstand, sondern auch der Ort dieser Berührung mit Bezug auf das Ende des Zylinders festgestellt. Anschließend kann optional die gesamte Ausbildung des Zylinders wieder parallel um einen vordefinierten Weg zurückverschoben werden.

Im zweiten Schritt des erfindungsgemäßen Verfahrens wird nunmehr keine parallele Verschiebung mehr durchgeführt, sondern vielmehr das dem erkannten Ende gegenüberliegende Ende des Zylinders auf den anderen Zylinder, insbesondere die Gegendruckwalze, zubewegt, insbesondere verschwenkt. Diese Schwenkbewegung beziehungsweise dieses Verschieben des Endes führt dazu, dass sich die Anstellung der Achse des Zylinders zur Achse des anderen Zylinders, insbesondere zur Achse der Gegendruckwalze, verändert. Hierbei ist ein möglichst paralleles Ausrichten gewünscht. Die Schritte erfolgen wie bei der parallelen Verschiebung, welche weiter oben erläutert worden ist, wobei entweder ein gleichzeitiges Rotieren und Verschieben oder aber ein schrittweises Rotieren und anschließendes Verschieben durchgeführt wird. In gleicher Weise wie beim ersten Ende erfolgt auch hier ein Anschlag, welchem vorzugsweise optional anschließend eine Rückverschiebung dieses Endes um einen vordefinierten Weg folgt. Im Ergebnis dieser beiden Schritte sind die beiden Enden des Zylinders hinsichtlich des Abstands von dem anderen Zylinder, insbesondere der Gegendruckwalze, und zusätzlich hinsichtlich der Ausrichtung der beiden Achsen winkelig zueinander genau und vordefiniert eingestellt. Von Vorteil ist es, wenn die Rückbewegung der beiden Enden des ausgerichteten Zylinders um den gleichen Betrag erfolgt, so dass eine parallele Ausrichtung der beiden Achsen der beiden Zylinder zueinander am Ende eines erfindungsgemäßen Verfahrens vorliegt.

Eine schrittweise Verschiebung in erfindungsgemäßer Weise sowohl in paralleler Art, als auch mit Bezug auf das zweite Ende des Zylinders, erfolgt vorzugsweise in besonders kleinen Schritten. Diese Schritte sind insbesondere geringer als circa 1 mm und befinden sich insbesondere in einem Bereich um circa 100µm.

Darauf hinzuweisen ist, dass im zweiten Schritt, also bei der Verschiebung des zweiten Endes des Zylinders durch die Schwenkbewegung, das erste Ende hinsichtlich seines Abstands zum anderen Zylinder, insbesondere zur Gegendruckwalze, konstant gehalten wird. Bei den einzelnen Zylindern handelt es sich vorzugsweise um Zylinder, zum Beispiel Formatzylinder, Rotationszylinder oder eine Gegendruckwalze, eine Druckmaschine, vorzugsweise eine Rotationsdruckmaschine beziehungsweise einer Flexodruckmaschine.

Ein derartig ausgebildetes Verfahren wird vorzugsweise automatisiert durchgeführt, also ohne Eingriff von außen. Die Kalibriervorrichtung kann auch als Kalibriersleeve ausgebildet sein, welches über einen der Zylinder übergeschoben wird. Die beiden Enden des auszurichtenden Zylinders sind in einer Druckvorrichtung auch als Antriebsende und Bedienende beziehungsweise Antriebsseite und Bedienseite ausgebildet, so dass auf der Antriebsseite der Rotationsantrieb des Zylinders und auf der Bedienseite der Zugriff für diesen Zylinder angeordnet sind.

Bei einem erfindungsgemäßen Verfahren kann es von Vorteil sein, wenn für das parallele Verschieben und das Verschieben eines Endes des Zylinders der gleiche oder im Wesentlichen gleiche vordefinierte Weg zurückgelegt wird. Dabei handelt es sich insbesondere um die Rückbewegung nach dem Erkennen der Berührung einer Erhebung einer Kalibriervorrichtung an den beiden Enden. Dies führt dazu, dass durch gleiche oder im Wesentlichen gleiche vordefinierte Wege anschließend ein vordefinierter Abstand zwischen den Oberflächen des Zylinders zur Gegendruckwalze beziehungsweise zum anderen Zylinder vorliegt und gleichzeitig aufgrund gleicher Rückbewegung eine Parallelität oder im Wesentlichen eine Parallelität der beiden Zylinderachsen zueinander gegeben ist.

Vorteilhaft ist es ebenfalls, wenn bei einem erfindungsgemäßen Verfahren die parallele Verschiebung des Zylinders und/oder die Verschiebung eines Endes des Zylinders auf den anderen Zylinder, insbesondere die Gegendruckwalze, zu schrittweise, insbesondere nach jeweils einer vollen Umdrehung des Zylinders, erfolgt. Die einzelnen Schritte sind zum Beispiel im Bereich von circa 100µm ausgebildet. Die Rotation wird also vorzugsweise kurz angehalten, um anschließend ein schrittweises Nachstellen in Form der parallelen Verschiebung oder des Verschwenkens durch die Verschiebung eines Endes des Zylinders durchzuführen. Selbstverständlich kann zusätzlich oder alternativ auch eine Weiterrotation während der Verschiebung erfolgen, so dass eine gleichzeitige Rotation und Verschiebung durchgeführt wird. Durch die Gleichzeitigkeit dieser beiden Aktionen wird ein erfindungsgemäßes Verfahren beschleunigt. Ein erfindungsgemäßes Verfahren in dieser Art kann vorzugsweise in Form einer Grobeinstellung beziehungsweise einer Grobkalibrierung durchgeführt werden.

Ein weiterer Vorteil wird dadurch erzielt, dass bei einem erfindungsgemäßen Verfahren an jedem Ende des Zylinders anschließend eine parallele Feinausrichtung des wenigstens einen Zylinders relativ zum anderen Zylinder, insbesondere zur Gegendruckwalze, durchgeführt wird. Die Feinjustierung ist insbesondere mit Bezug auf die zurückgelegten Schritte während der einzelnen Verschiebungen in paralleler Weise oder bei der Schwenkverschiebung des Endes des Zylinders zu verstehen. So wird bei der Feinjustierung vorzugsweise eine reduzierte Schrittweite verwendet. Damit kann eine noch höhere Genauigkeit hinsichtlich Parallelität, aber auch hinsichtlich des definierten Abstands zwischen der Oberfläche der beiden zueinander ausgerichteten Zylinder eingestellt werden.

Ein erfindungsgemäßes Verfahren gemäß dem voranstehenden Abschnitt wird vorzugsweise dahingehend weitergebildet, dass für die Feinausrichtung eines Endes des Zylinders die folgenden Schritte durchgeführt werden:
- Schrittweises Verschieben des Endes des Zylinders auf den anderen Zylinder, insbesondere die Gegendruckwalze, zu, und Rotation des Zylinders, wobei bei jedem Schritt ein zum vorherigen Schritt verringerter, insbesondere im Wesentlichen halbierter Weg zurückgelegt wird,
- Erkennen der Berührung der am verschobenen Ende des Zylinders entsprechenden Erhebung der Kalibriervorrichtung mit dem anderen Zylinder, insbesondere der Gegendruckwalze,
- Verschieben des Endes des Zylinders von dem anderen Zylinder, insbesondere der Gegendruckwalze, weg um einen Schritt, bei dem ein zum vorherigen Schritt verringerter, insbesondere im Wesentlichen halbierter Weg zurückgelegt wird.

Die voranstehenden Schritte können beliebig häufig wiederholt werden, so dass pro Schritt vorzugsweise eine Reduzierung, insbesondere eine Halbierung der Schrittweite erfolgt. Eine solche Teilungskaskade kann zum Beispiel 100µm, 50µm, 25µm, 12µm, 6µm und abschließend 3µm beinhalten. Damit nähert sich der Zylinder dem anderen Zylinder, insbesondere der Gegendruckwalze, immer weiter an, so dass der Abstand und die Parallelität der beiden Zylinder zueinander feinjustiert werden.

Ein erfindungsgemäßes Verfahren kann dahin gehend weitergebildet sein, dass die ausgerichtete Position des Zylinders als Null-Position für den Stellantrieb der Verschiebung des Zylinders gesetzt wird. Neben dem Rotationsantrieb des Zylinders können Stellantriebe, zum Beispiel in Form von Spindelantrieben vorgesehen sein. Bei dem Einsatz der Zylinder während der Produktion, insbesondere bei einem Druckverfahren, kann es vorkommen, dass die Nullstellengeber solcher Stellantriebe sich verschieben beziehungsweise die Gesamtrelation der Zylinder zueinander sich verstellt. Durch ein erfindungsgemäßes Verfahren erfolgt eine Neukalibrierung, welche, insbesondere in elektronischer Weise, die Null-Position für den Stellantrieb neu setzt. Ausgehend von dieser neu kalibrierten Null-Position kann in definierter Weise nunmehr die Einstellung des Abstands der Zylinder zueinander beziehungsweise die Anstellung und der Anstellungswinkel der Zylinder zueinander eingestellt werden. Dabei sind Stellantriebe vorzugsweise für beide Enden des Zylinders unabhängig voneinander vorgesehen, so dass ein erster Stellantrieb für das erste Ende des Zylinders und ein zweiter Stellantrieb auf das zweite Ende des Zylinders wirkt.

Ein weiterer Vorteil ist es, wenn bei einem erfindungsgemäßen Verfahren ein Außenzylinder, insbesondere ein Rasterzylinder einer Druckmaschine, parallel zum ausgerichteten Zylinder relativ ausgerichtet wird. Dabei werden die gleichen Schritte durchgeführt, wie sie bereits ausführlich erläutert worden sind. Jedoch wird anstelle des Zylinders und jeweils eines Endes des Zylinders der Außenzylinder und jeweils ein Ende des Außenzylinders relativ zum bereits ausgerichteten Zylinder verschoben. Der Formatzylinder (der bereits ausgerichtete Zylinder) bleibt in einer zu einem weiteren Zylinder, insbesondere einer Gegendruckwalze, ausgerichteten Position. Dieses Verfahren kann insbesondere als Kettenausrichtung durchgeführt werden, so dass anschließend eine beliebige Anzahl weiterer Außenzylinder relativ anschließend in erfindungsgemäßer Weise ausgerichtet werden. Auch für ein oder mehrere solcher Außenzylinder wird eine Null-Position für Stellantriebe vorgegeben.

Ein weiterer Gegenstand der vorliegenden Erfindung ist eine Kalibriervorrichtung für die parallele Ausrichtung von wenigstens einem Zylinder einer Druckmaschine relativ zu einem anderen Zylinder, insbesondere einer Gegendruckwalze. Eine solche Kalibriervorrichtung weist einen im Wesentlichen hohlzylindrischen Kalibrierkörper auf, an dessen beiden Enden jeweils eine radiale Erhebung angeordnet ist. Diese beiden radialen Erhebungen sind zueinander in Umfangsrichtung des Zylinders versetzt angeordnet, und die Kalibriervorrichtung ist für die Anordnung auf dem Zylinder ausgebildet. Eine solche erfindungsgemäße Kalibriervorrichtung wird bei einem erfindungsgemäßen Verfahren eingesetzt. Damit bringt eine erfindungsgemäße Kalibriervorrichtung die gleichen Vorteile mit sich, wie sie ausführlich mit Bezug auf ein erfindungsgemäßes Verfahren erläutert worden sind.

Von Vorteil ist es, wenn bei einer erfindungsgemäßen Kalibriervorrichtung die beiden Erhebungen zueinander in Umfangsrichtung 180° oder im Wesentlichen 180° versetzt zueinander angeordnet sind. Damit teilt sich die Erkennungsmöglichkeit bei einer Vollumdrehung von 360° auf zwei gleichgroße Schrittweiten hinsichtlich der Rotation auf. Diese symmetrische Ausbildung führt dazu, dass zum einen eine genauere Erkennung der Relativposition der beiden Zylinder zueinander und zum anderen eine leichtere Fertigung der Kalibriervorrichtung selbst durchgeführt werden kann.

Ebenfalls von Vorteil ist es, wenn bei einer erfindungsgemäßen Kalibriervorrichtung die Erhebungen gleiche oder im Wesentlichen gleiche radiale Streckungen aufweisen, insbesondere im Bereich von circa 0,5mm bis 5mm. Bevorzugt ist ein Bereich um circa 2mm plus/minus circa 0,5mm. Die Oberfläche der jeweiligen Erhebung beträgt vorzugsweise circa 30mm x circa 60mm. Diese Erhebungen erstrecken sich radial nach außen und damit erhaben über der restlichen Oberfläche der Kalibriervorrichtung, insbesondere über der restlichen Oberfläche des Kalibrierkörpers. Sie stehen damit nach der Anordnung der Kalibriervorrichtung auf den Zylinder auch radial in Bezug auf diesen Zylinder nach außen ab.

Vorteilhaft ist es ebenfalls, wenn bei einer erfindungsgemäßen Kalibriervorrichtung die Oberfläche der Erhebungen gekrümmt oder zumindest abschnittsweise gekrümmt ausgebildet ist. Dies führt hinsichtlich der Erkennung der Berührung dieser Erhebung mit einem gegenüberliegenden anderen Zylinder zu einer Linienberührung, so dass eine noch feinere und genauere Positionierung beziehungsweise Erkennung einer solchen Berührung durchgeführt werden kann.

Die vorliegende Erfindung wird näher erläutert anhand der beigefügten Zeichnungsfiguren. Die dabei verwendeten Begrifflichkeiten "links" "rechts" "oben" und "unten" beziehen sich auf eine Ausrichtung der Zeichnungsfiguren mit normal lesbaren Bezugszeichen. Es zeigen schematisch:
- Figur 1: Eine Ausbildung verschiedener Zylinder in Relation zueinander,
- Figur 2: eine Ausführungsform einer Kalibriervorrichtung,
- Figur 3: ein erster Schritt einer Ausführungsform eines erfindungsgemäßen Verfahrens,
- Figur 4: ein weiterer Schritt einer Ausführungsform eines erfindungsgemäßen Verfahrens,
- Figur 5: ein weiterer Schritt einer Ausführungsform eines erfindungsgemäßen Verfahrens
- Figur 6: ein weiterer Schritt einer Ausführungsform eines erfindungsgemäßen Verfahrens,
- Figur 7: ein weiterer Schritt einer Ausführungsform eines erfindungsgemäßen Verfahrens,
- Figur 8: ein weiterer Schritt einer Ausführungsform eines erfindungsgemäßen Verfahrens und
- Figur 9: eine schematische Darstellung einer Feinjustierung mit einem erfindungsgemäßen Verfahren.

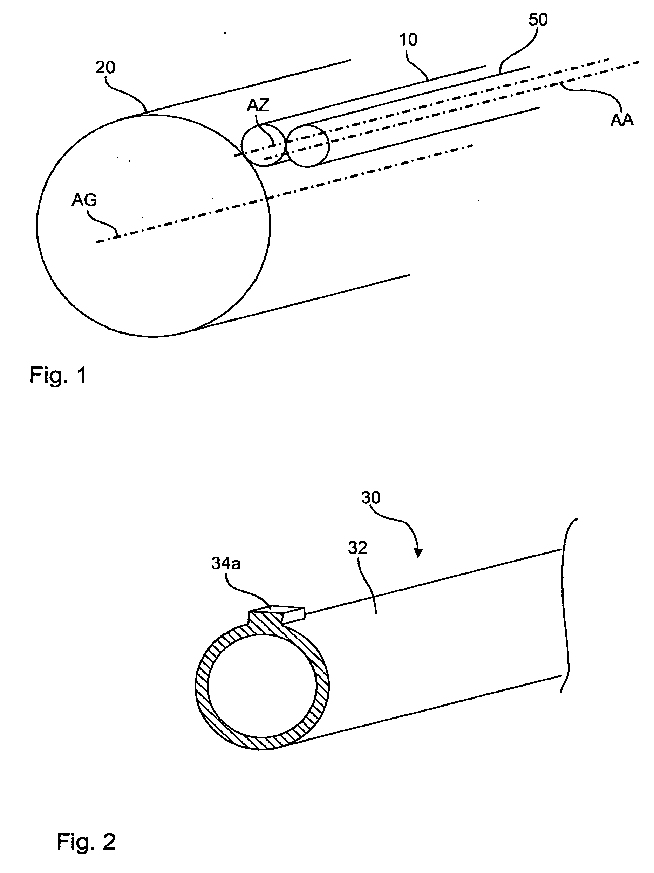

Figur 1 zeigt eine Möglichkeit, wie verschiedene Zylinder 10, 20 und 50 relativ zueinander angeordnet sein können. Dabei kann es sich bei dem Zylinder 10 um eine Formatwalze einer Druckmaschine, insbesondere einer Rotationsdruckmaschine beziehungsweise einer Flexodruckmaschine, handeln. Die Ausrichtung erfolgt vorzugsweise zu einer Gegendruckwalze 20, die als Gegendruckwalze für eine Vielzahl von (nicht dargestellten) weiteren Zylindern verwendet werden kann. Darüber hinaus kann ein Außenzylinder 50 in Form einer Rasterwalze vorgesehen sein, welcher ebenfalls relativ zu dem Zylinder 10 und damit auch anschließend beziehungsweise verkettet relativ zu der Gegendruckwalze 20 ausgerichtet werden kann.

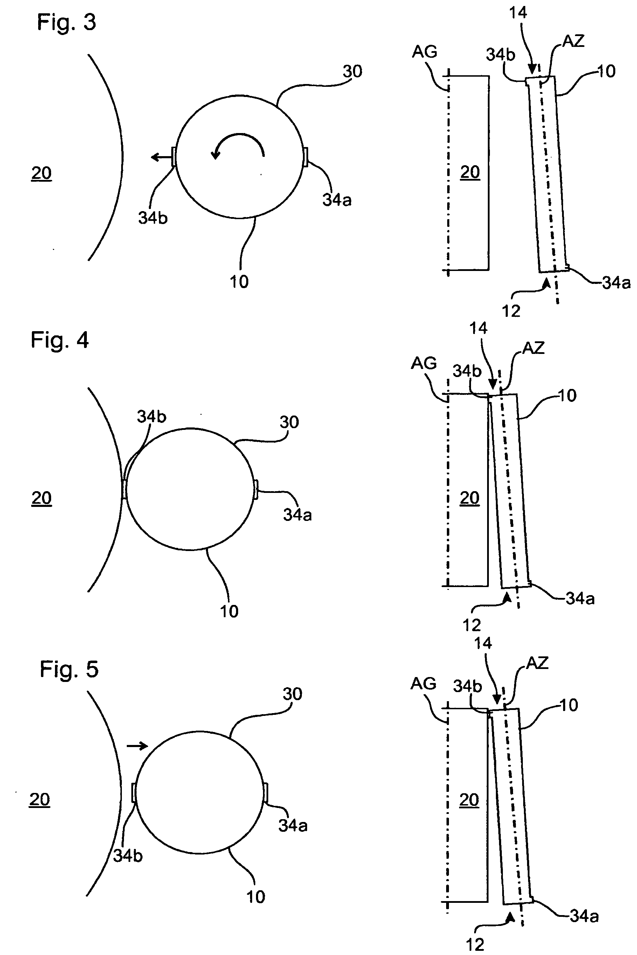

Unter der Ausrichtung in paralleler Weise ist die Ausrichtung der einzelnen Rotationsachsen AG, AZ und AA zueinander zu verstehen. Diese Achsen werden durch ein erfindungsgemäßes Verfahren zueinander verschoben beziehungsweise verschwenkt, wie dies später insbesondere mit Bezug auf die Figuren 3 bis 8 näher erläutert wird.

Bei einem erfindungsgemäßen Verfahren wird eine Kalibriervorrichtung 30 eingesetzt, wie sie beispielhaft in Figur 2 dargestellt ist. Sie weist einen hohlzylindrischen oder im Wesentlichen hohlzylindrischen Kalibrierkörper 32 auf, welcher an seinen beiden Enden jeweils eine radiale Erhebung 34a und 34b aufweist. Aus Übersichtlichkeitsgründen ist in Figur 2 nur ein erstes Ende und damit nur eine erste radiale Erhebung 34a dargestellt.

Anhand der Figuren 3 bis 8 wird nun eine Möglichkeit der Durchführung eines erfindungsgemäßen Verfahrens erläutert. Dabei wird Bezug genommen auf eine Ausrichtung des Zylinders 10 relativ zur Gegendruckwalze 20. Selbstverständlich können die gleichen Schritte in identischer Weise auch für eine Ausrichtung des Außenzylinders 50 relativ zum Zylinder 10 durchgeführt werden, wobei eine entsprechende Verschiebung in gleicher Weise durchgeführt wird.

Figur 3 zeigt eine Ausgangssituation, wobei der Zylinder 10 mit seiner Zylinderachse AZ winklig und beabstandet zu der Gegendruckwalze 20 beziehungsweise der Rotationsachse AG der Gegendruckwalze 20 angeordnet ist. In dieser Position wurde eine Kalibriervorrichtung 30, zum Beispiel gemäß Figur 2, auf den Zylinder 10 aufgezogen, so dass an den beiden Enden 12 und 14 des Zylinders 10 nun jeweils eine in Umfangsrichtung versetzte Erhebung 34a und 34b zu erkennen ist. Figuren 3 bis Figur 8 zeigen jeweils zwei Abbildungen, wobei links eine Blickrichtungen entlang der jeweiligen Achse des Zylinders 10 beziehungsweise der Gegendruckwalze 20 dargestellt ist, während auf der rechten Seite der jeweiligen Figur eine Draufsicht zu erkennen ist.

In Figur 3 ist der Start eines erfindungsgemäßen Verfahrens dargestellt, wobei der Zylinder 10 um 360° rotiert und anschließend oder gleichzeitig auf die Gegendruckwalze 20 zubewegt wird. Die Schrittweite des Daraufzubewegens in Form einer parallelen Verschiebung wird vorzugsweise im Bereich von circa 100µm durchgeführt. Dieses schrittweise Rotieren und parallele Verschieben erfolgt bis eine der beiden Erhebungen 34a und 34b an der Gegendruckwalze 20 anschlägt. Diese Situation ist in Figur 4 dargestellt. Aufgrund der Tatsache, dass die beiden Erhebungen 34a und 34b in Umfangsrichtung zueinander versetzt sind, wird durch die Stellposition in Rotationsrichtung des Rotationsantriebes des Zylinders 10 erkannt, welche der beiden Erhebungen 34a und 34b gerade die Berührung mit der Gegendruckwalze 20 durchgeführt hat.

In Figur 4 handelt es sich hierbei um die Erhebung 34b, welche dem Bedienende 14 des Zylinders 10 zugeordnet ist. Hier ist also eine definierte Position hinsichtlich des Abstands dieses Bedienendes 14 relativ zur Gegendruckwalze 20 vorliegend. Um anschließend in einem weiteren Schritt auch das Antriebsende 12 in gleicher Weise ausrichten zu können, wird ein Schritt durchgeführt, welcher bei einem erfindungsgemäßen Verfahren von Vorteil aber grundsätzlich optional ist. Dabei handelt es sich um eine parallele Verschiebung des Zylinders 10 von der Gegendruckwalze 20 weg, um einen vordefinierten Weg. Dieser vordefinierte Weg kann zum Beispiel im Bereich von circa 100µm liegen.

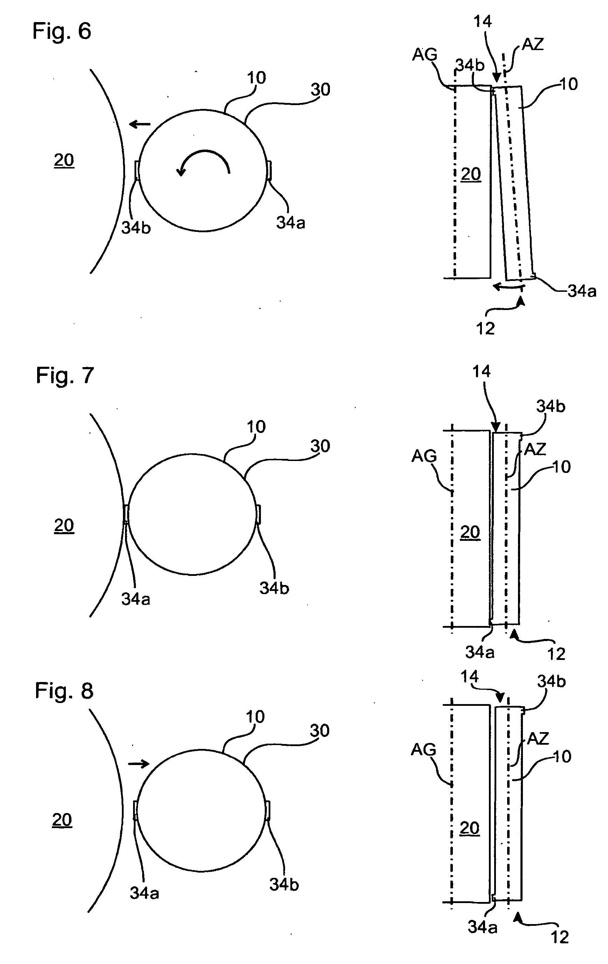

Damit bildet die Figur 5 nun die Ausgangsposition für den nächsten Schritt des Verfahrens, wie er in Figur 6 dargestellt ist. Auch hier wird nun der Zylinder 10 wieder rotiert, vorzugsweise schrittweise um immer 360°. Gleichzeitig erfolgt eine Verschiebung des anderen Endes, in diesem Fall des Antriebsendes 12, auf die Gegendruckwalze 20 zu. Dadurch, dass hier nunmehr nur das eine Ende 12 des Zylinders 10 verschoben wird, wird die Achse AZ des Zylinder 10 auf die Achse AG der Gegendruckwalze 20 zu verschwenkt, wie dies der Pfeil am Antriebsende 12 darstellt. Das Ende dieses Vorgangs ist in Figur 7 dargestellt, nämlich wenn die erste Erhebung 34a die Gegendruckwalze 20 berührt. In dieser Position ist nun eine definierte Beabstandung des Antriebsendes 12 des Zylinders 10 relativ zur Oberfläche der Gegendruckwalze 20 gegeben.

Anschließend kann von vorteilhafter Weise jedoch als optionaler Schritt auch hier ein Wegbewegen des Antriebsendes 12 des Zylinders 10 von der Gegendruckwalze 20 erfolgen. Der vordefinierte Weg dieses Wegbewegens ist vorzugsweise identisch wie weiter oben beschrieben, im Wesentlichen circa 100µm. Ob mit oder ohne Wegbewegung liegt im Ergebnis nun eine parallel ausgerichtete Achse AZ relativ zu Achse AG der Gegendruckwalze 20 vor. Dadurch, dass die Abmessung in den Erhebungen 34a und 34b in Radialrichtung und darüber hinaus die Dicke des Kalibrierkörpers 32 bekannt sind, kann auf diese Weise nun ein Rückschluss auf die tatsächliche Beabstandung der Oberflächen der Zylinder 10 und der Gegendruckwalze 20 wie auch der Parallelitätssituation der beiden Achsen AZ und AG zueinander erfolgen. Diese Position wird als Null-Position gesetzt, so dass durch Stellantriebe (nicht dargestellt) die beiden Enden des Zylinders 10 nun ausgehend von dieser neu kalibrierten Null-Position verstellt werden können.

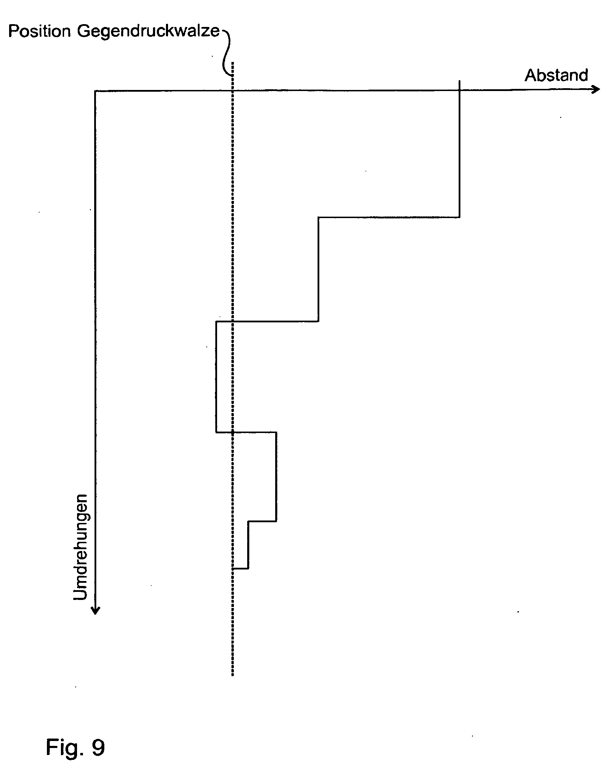

In Figur 9 ist schematisch eine Durchführung einer Feinjustierung dargestellt. Dabei ist in der horizontalen Richtung der Abstand der beiden Zylinder beziehungsweise des Zylinders 10 zur Gegendruckwalze 20 dargestellt. Auf der Vertikalachse wird die Anzahl der Umdrehungen dargestellt. Ausgehend von der Position rechts oben mit einem Abstand von circa 100µm wird eine Rotation des Zylinders 10 durchgeführt. Da keine Berührung erkannt worden ist, wird der Zylinder 10 beziehungsweise sein Ende 12 oder 14 auf die Gegendruckwalze 20 um 50µm zu verschoben. Anschließend erfolgt die nächste Rotation des Zylinders 10, bei welcher ebenfalls keine Berührung erkannt wird. Wiederum anschließend erfolgt eine Verschiebung eines der Enden 12 oder 14 des Zylinders 10 und eine parallele Verschiebung des Zylinders 10 auf die Gegendruckwalze 20 zu, um einen vordefinierten Weg von 25µm. Bei der anschließenden Rotation wird eine Berührung zumindest einer der beiden Erhebungen 34a und 34b erkannt. Da man nun zu nahe an der Gegendruckwalze 20 ist, wird anschließend um einen wiederum halbierten Weg, nämlich um 12µm eine Bewegung des Zylinders 10 beziehungsweise einer der beiden Enden 12 oder 14 von der Gegendruckwalze 20 wegbewegt. Anschließend erfolgt eine Rotation und wiederum eine Bewegung auf die Gegendruckwalze 20 zu, so dass immer geringere Schrittweiten eine Feinjustierung der Ausrichtung des Endes beziehungsweise der Achse AZ des Zylinders 10 durchführen.

| **Bezugszeichenliste** | |
|---|---|
| 10 | Zylinder |
| 12 | Antriebsende |
| 14 | Bedienende |
| 20 | Gegendruckwalze |
| 30 | Kalibriervorrichtung |
| 32 | Kalibrierkörper |
| 34a | Radiale Erhebung |
| 34b | Radiale Erhebung |
| 50 | Außenzylinder |
| | |
| AG | Rotationsachse Gegendruckwalze |
| AZ | Rotationsachse Zylinder |
| AA | Rotationsachse Außenzylinder |

## Patentansprüche

1. Verfahren für die parallele Ausrichtung von wenigstens zwei Zylindern (10, 20, 50) zueinander,
wobei in einem ersten Schritt eine Rotation und parallele Verschiebung eines Zylinders (10, 20, 50) auf den anderen Zylinder (10, 20, 50) zu für eine Ausrichtung eines ersten Endes (14) des Zylinders (10, 20, 50) erfolgt, und in einem zweiten Schritt eine Rotation und eine Verschiebung des zweiten Endes (12) des Zylinders (10, 20, 50) auf den anderen Zylinder (10, 20, 50) zu für eine Ausrichtung des zweiten Endes (12) des Zylinders (10, 20, 50) erfolgt, **dadurch gekennzeichnet, dass** eine Kalibriervorrichtung (30) verwendet wird, aufweisend einen im Wesentlichen hohlzylindrischen Kalibrierkörper (32), an dessen beiden Enden jeweils eine radiale Erhebung (34a, 34b) angeordnet ist, die zueinander in Umfangsrichtung des Zylinders (10, 20, 50) versetzt sind.

2. Verfahren nach Anspruch 1,
**dadurch gekennzeichnet,**
**dass** wenigstens ein Zylinder (10, 50) relativ zu einem anderen Zylinder in Form einer Gegendruckwalze (20) parallel ausgerichtet wird.

3. Verfahren nach Anspruch 1 oder 2,
**gekennzeichnet durch** die folgenden Schritte:
- Rotieren eines Zylinders (10, 20, 50) und parallele Verschiebung des Zylinders (10, 20, 50) auf einen anderen Zylinder, insbesondere eine Gegendruckwalze (20), zu,
- Erkennen der Berührung einer der beiden Erhebungen (34a, 34b) mit dem anderen Zylinder, insbesondere der Gegendruckwalze (20),
- Parallele Verschiebung des Zylinders (10, 20, 50) von dem anderen Zylinder, insbesondere der Gegendruckwalze (20), weg um einen vordefinierten Weg,
- Rotieren des Zylinders (10, 20, 50) und Verschiebung des Endes (12, 14) des Zylinders (10, 20, 50) auf den anderen Zylinder, insbesondere die Gegendruckwalze (20), zu, welches gegenüber der Erhebung (34a, 34b) der erkannten Berührung liegt,
- Erkennen der Berührung der anderen der beiden Erhebungen (34a, 34b) mit dem anderen Zylinder, insbesondere der Gegendruckwalze (20),
- Verschiebung des Endes (12, 14) des Zylinders (10, 20, 50), welches gegenüber der Erhebung (34a, 34b) der zuerst erkannten Berührung liegt, von dem anderen Zylinder, insbesondere der Gegendruckwalze (50), weg um einen vordefinierten Weg.

4. Verfahren nach Anspruch 3,
**dadurch gekennzeichnet,**
**dass** für das parallele Verschieben und das Verschieben eines Endes (12, 14) des Zylinders (10, 20, 50) der gleiche oder im Wesentlichen gleiche vordefinierte Weg zurückgelegt wird.

5. Verfahren nach einem der vorangegangenen Ansprüche,
**dadurch gekennzeichnet,**
**dass** die parallele Verschiebung des Zylinders (10, 20, 50) und/oder die Verschiebung eines Endes (12, 14) des Zylinders (10, 20, 50) auf den anderen Zylinder, insbesondere die Gegendruckwalze (20), zu schrittweise, insbesondere nach jeweils einer vollen Umdrehung des Zylinders (10, 20, 50), erfolgt.

6. Verfahren nach einem der vorangegangenen Ansprüche,
**dadurch gekennzeichnet,**
**dass** an jedem Ende (12, 14) des Zylinders (10, 20, 50) anschließend eine parallele Feinausrichtung des wenigstens einen Zylinders (10, 20, 50) relativ zum anderen Zylinder, insbesondere zur Gegendruckwalze (20), durchgeführt wird.

7. Verfahren nach Anspruch 6,
**dadurch gekennzeichnet,**
**dass** für die Feinausrichtung eines Endes (12, 14) des Zylinders (10, 20, 50) die folgenden Schritte durchgeführt werden:
- Schrittweises Verschieben des Endes (12, 14) des Zylinders (10, 20, 50) auf den anderen Zylinder, insbesondere die Gegendruckwalze (20), zu und Rotation des Zylinders (10, 20, 50), wobei bei jedem Schritt ein zum vorherigen Schritt verringerter, insbesondere im Wesentlichen halbierter Weg zurückgelegt wird,
- Erkennen der Berührung der dem verschobenen Ende (12, 14) des Zylinders (10, 20, 50) entsprechenden Erhebung (34a, 34b) der Kalibriervorrichtung (30) mit dem anderen Zylinder, insbesondere der Gegendruckwalze (20),
- Verschieben des Endes (12, 14) des Zylinders (10, 20, 50) von dem anderen Zylinder, insbesondere der Gegendruckwalze (20), weg um einen Schritt, bei dem ein zum vorherigen Schritt verringerter, insbesondere im Wesentlichen halbierter Weg zurückgelegt wird.

8. Verfahren nach einem der vorangegangenen Ansprüche,
**dadurch gekennzeichnet,**
**dass** die ausgerichtete Position des Zylinders (10, 20, 50) als Null-Position für einen Stellantrieb für die Verschiebung des Zylinders (10, 20, 50) gesetzt wird.

9. Verfahren nach einem der vorangegangenen Ansprüche,
**dadurch gekennzeichnet,**
**dass** ein Außenzylinder (50), insbesondere ein Rasterzylinder einer Druckmaschine, parallel relativ zum ausgerichteten Zylinder (10, 20, 50) ausgerichtet wird, wobei die gleichen Schritte gemäß einem der Ansprüche 1 bis 8 durchgeführt werden, jedoch anstelle des Zylinders (10, 20, 50) und jeweils eines Endes (12, 14) des Zylinders (10, 20, 50) der Außenzylinder (50) und jeweils ein Ende des Außenzylinders (50) verschoben werden.

10. Kalibriervorrichtung (30) für die die parallele Ausrichtung von wenigstens einem Zylinder (10, 20, 50) einer Druckmaschine relativ zu einem anderen Zylinder, insbesondere einer Gegendruckwalze (20), aufweisend einen im Wesentlichen hohlzylindrischen Kalibrierkörper (32), **dadurch gekennzeichnet, dass** an dessen beiden Enden jeweils eine radiale Erhebung (34a, 34b) angeordnet ist, die zueinander in Umfangsrichtung des Zylinders (10, 20, 50) versetzt sind, und welcher für die Anordnung auf dem Zylinder (10, 20, 50) ausgebildet ist.

11. Kalibriervorrichtung (30) nach Anspruch 10,
**dadurch gekennzeichnet,**
**dass** die beiden Erhebungen (34a, 34b) zueinander in Umfangsrichtung 180° oder im Wesentlichen 180° versetzt zueinander angeordnet sind.

12. Kalibriervorrichtung (30) nach einem der Ansprüche 10 bis 11,
**dadurch gekennzeichnet,**
**dass** die Erhebungen (34a, 34b) gleiche oder im Wesentlichen gleiche radiale Erstreckung aufweisen, insbesondere im Bereich von circa 0,5mm bis 5mm.

13. Kalibriervorrichtung (30) nach einem der Ansprüche 10 bis 12,
**dadurch gekennzeichnet,**
**dass** die Oberfläche der Erhebungen (34a, 34b) gekrümmt ist.

## Claims

1. Method for the parallel orientation of at least two cylinders (10, 20, 50) with respect to one another, a rotation and parallel displacement of one cylinder (10, 20, 50) towards the other cylinder (10, 20, 50) taking place in a first step for an orientation of a first end (14) of the cylinder (10, 20, 50), and a rotation and a displacement of the second end (12) of the cylinder (10, 20, 50) towards the other cylinder (10, 20, 50) taking place in a second step for an orientation of the second end (12) of the cylinder (10, 20, 50), **characterized in that** a calibrating apparatus (30) is used, having a substantially hollow-cylindrical calibrating body (32), at the two ends of which in each case one radial elevation (34a, 34b) is arranged, which radial elevations are offset with respect to one another in the circumferential direction of the cylinder (10, 20, 50).

2. Method according to Claim 1, **characterized in that** at least one cylinder (10, 50) is oriented in parallel relative to another cylinder in the form of a backing roll (20).

3. Method according to Claim 1 or 2, **characterized by** the following steps:
- rotation of a cylinder (10, 20, 50) and parallel displacement of the cylinder (10, 20, 50) towards another cylinder, in particular a backing roll (20),
- detection of the contact of one of the two elevations (34a, 34b) with the other cylinder, in particular the backing roll (20),
- parallel displacement of the cylinder (10, 20, 50) away from the other cylinder, in particular the backing roll (20), by a predefined travel,
- rotation of the cylinder (10, 20, 50) and displacement of that end (12, 14) of the cylinder (10, 20, 50) which lies opposite the elevation (34a, 34b) of the detected contact towards the other cylinder, in particular the backing roll (20),
- detection of the contact of the other of the two elevations (34a, 34b) with the other cylinder, in particular the backing roll (20),
- displacement of that end (12, 14) of the cylinder (10, 20, 50) which lies opposite the elevation (34a, 34b) of the contact which was detected first away from the other cylinder, in particular the backing roll (50), by a predefined travel.

4. Method according to Claim 3, **characterized in that** the same or substantially same predefined travel is moved for the parallel displacement and the displacement of one end (12, 14) of the cylinder (10, 20, 50).

5. Method according to one of the preceding claims, **characterized in that** the parallel displacement of the cylinder (10, 20, 50) and/or the displacement of one end (12, 14) of the cylinder (10, 20, 50) towards the other cylinder, in particular the backing roll (20), takes place in a stepped manner, in particular after in each case one full revolution of the cylinder (10, 20, 50).

6. Method according to one of the preceding claims, **characterized in that** a parallel precision orientation of the at least one cylinder (10, 20, 50) relative to the other cylinder, in particular the backing roll (20), is carried out subsequently at each end (12, 14) of the cylinder (10, 20, 50).

7. Method according to Claim 6, **characterized in that** the following steps are carried out for the precision orientation of one end (12, 14) of the cylinder (10, 20, 50):
- stepped displacement of the end (12, 14) of the cylinder (10, 20, 50) towards the other cylinder, in particular the backing roll (20), and rotation of the cylinder (10, 20, 50), a travel which is reduced with respect to the preceding step, in particular is substantially halved, being moved during each step,
- detection of the contact of that elevation (34a, 34b) of the calibrating apparatus (30) which corresponds to the displaced end (12, 14) of the cylinder (10, 20, 50) with the other cylinder, in particular the backing roll (20),
- displacement of the end (12, 14) of the cylinder (10, 20, 50) away from the other cylinder, in particular the backing roll (20), by a step in which a travel which is reduced with respect to the preceding step, in particular is substantially halved, is moved.

8. Method according to one of the preceding claims, **characterized in that** the oriented position of the cylinder (10, 20, 50) is set as zero position for an actuating drive for the displacement of the cylinder (10, 20, 50).

9. Method according to one of the preceding claims, **characterized in that** an outer cylinder (50), in particular an anilox cylinder of a printing press, is oriented parallel relative to the oriented cylinder (10, 20, 50), the same steps according to one of Claims 1 to 8 being carried out, but the outer cylinder (50) and in each case one end of the outer cylinder (50) being displaced instead of the cylinder (10, 20, 50) and in each case one end (12, 14) of the cylinder (10, 20, 50).

10. Calibrating apparatus (30) for the parallel orientation of at least one cylinder (10, 20, 50) of a printing press relative to another cylinder, in particular a backing roll (20), having a substantially hollow-cylindrical calibrating body (32), **characterized in that** in each case one radial elevation (34a, 34b) is arranged at its two ends, which radial elevations are offset with respect to one another in the circumferential direction of the cylinder (10, 20, 50), and which calibrating body (32) is configured for being arranged on the cylinder (10, 20, 50).

11. Calibrating apparatus (30) according to Claim 10, **characterized in that** the two elevations (34a, 34b) are arranged offset with respect to one another in the circumferential direction by 180° or substantially 180°.

12. Calibrating apparatus (30) according to either of Claims 10 and 11, **characterized in that** the elevations (34a, 34b) have an identical or substantially identical radial extent, in particular in the range from approximately 0.5 mm to 5 mm.

13. Calibrating apparatus (30) according to one of Claims 10 to 12, **characterized in that** the surface of the elevations (34a, 34b) is curved.

## Revendications

1. Procédé permettant d'aligner au moins deux cylindres (10, 20, 50) parallèlement l'un à l'autre, dans lequel on opère dans une première étape une rotation et un déplacement parallèle d'un cylindre (10, 20, 50) en direction de l'autre cylindre (10, 20, 50) pour un alignement d'une première extrémité (14) du cylindre (10, 20, 50), et on opère dans une deuxième étape une rotation et un déplacement de la deuxième extrémité (12) du cylindre (10, 20, 50) en direction de l'autre cylindre (10, 20, 50) pour un alignement de la deuxième extrémité (12) du cylindre (10, 20, 50), **caractérisé en ce que** l'on utilise un dispositif de calibrage (30), présentant un corps de calibrage (32) essentiellement cylindrique creux, aux deux extrémités duquel est respectivement disposée une protubérance radiale (34a, 34b), qui sont décalées l'une par rapport à l'autre dans la direction périphérique du cylindre (10, 20, 50).

2. Procédé selon la revendication 1, **caractérisé en ce qu'**au moins un cylindre (10, 50) est aligné par rapport à un autre cylindre sous la forme d'un rouleau de contrepression (20).

3. Procédé selon la revendication 1 ou 2, **caractérisé par** les étapes suivantes :
- rotation d'un cylindre (10, 20, 50) et déplacement parallèle du cylindre (10, 20, 50) en direction d'un autre cylindre, en particulier un rouleau de contrepression (20),
- reconnaissance du contact d'une des deux protubérances (34a, 34b) avec l'autre cylindre, en particulier le rouleau de contrepression (20),
- déplacement parallèle du cylindre (10, 20, 50) à partir de l'autre cylindre, en particulier du rouleau de contrepression (20), d'une course prédéfinie,
- rotation du cylindre (10, 20, 50) et déplacement de l'extrémité (12, 14) du cylindre (10, 20, 50) en direction de l'autre cylindre, en particulier du rouleau de contrepression (20), qui est située en face de la protubérance (34a, 34b) du contact reconnu,
- reconnaissance du contact de l'autre des deux protubérances (34a, 34b) avec l'autre cylindre, en particulier le rouleau de contrepression (20),
- déplacement de l'extrémité (12, 14) du cylindre (10, 20, 50), qui est située en face de la protubérance (34a, 34b) du contact reconnu en premier lieu, à partir de l'autre cylindre, en particulier du rouleau de contrepression (50), d'une course prédéfinie.

4. Procédé selon la revendication 3, **caractérisé en ce que** l'on parcourt, pour le déplacement parallèle et le déplacement d'une extrémité (12, 14) du cylindre (10, 20, 50), une course identique ou essentiellement identique.

5. Procédé selon l'une quelconque des revendications précédentes, **caractérisé en ce que** l'on opère le déplacement parallèle du cylindre (10, 20, 50) et/ou le déplacement d'une extrémité (12, 14) du cylindre (10, 20, 50) en direction de l'autre cylindre, en particulier du rouleau de contrepression (20), pas à pas, en particulier chaque fois après une révolution complète du cylindre (10, 20, 50).

6. Procédé selon l'une quelconque des revendications précédentes, **caractérisé en ce que** l'on effectue ensuite, à chaque extrémité (12, 14) du cylindre (10, 20, 50), un alignement parallèle fin dudit au moins un cylindre (10, 20, 50) par rapport à l'autre cylindre, en particulier au rouleau de contrepression (20).

7. Procédé selon la revendication 6, **caractérisé en ce que** l'on effectue les étapes suivantes pour l'alignement fin d'une extrémité (12, 14) du cylindre (10, 20, 50) :
- déplacement pas à pas de l'extrémité (12, 14) du cylindre (10, 20, 50) en direction de l'autre cylindre, en particulier du rouleau de contrepression (20), et rotation du cylindre (10, 20, 50), dans lequel on effectue à chaque pas une course réduite, en particulier réduite essentiellement de moitié, par rapport au pas précédent,
- reconnaissance du contact de la protubérance (34a, 34b) du dispositif de calibrage (30) correspondant à l'extrémité déplacée (12, 14) du cylindre (10, 20, 50) avec l'autre cylindre, en particulier le rouleau de contrepression (20),
- déplacement de l'extrémité (12, 14) du cylindre (10, 20, 50) à partir de l'autre cylindre, en particulier du rouleau de contrepression (20), d'un pas par lequel on parcourt une course réduite, en particulier réduite essentiellement de moitié, par rapport au pas précédent.

8. Procédé selon l'une quelconque des revendications précédentes, **caractérisé en ce que** l'on pose la position alignée du cylindre (10, 20, 50) comme position zéro pour un entraînement de réglage pour le déplacement du cylindre (10, 20, 50).

9. Procédé selon l'une quelconque des revendications précédentes, **caractérisé en ce que** l'on aligne un cylindre extérieur (50), en particulier un cylindre de trame d'une machine d'imprimerie, parallèlement par rapport au cylindre aligné (10, 20, 50), dans lequel on effectue les mêmes étapes selon l'une quelconque des revendications 1 à 8 mais, au lieu du cylindre (10, 20, 50) et respectivement d'une extrémité (12, 14) du cylindre (10, 20, 50), on déplace le cylindre extérieur (50) et respectivement une extrémité du cylindre extérieur (50).

10. Dispositif de calibrage (30) pour l'alignement parallèle d'au moins on cylindre (10, 20, 50) d'une machine d'imprimerie par rapport à un autre cylindre, en particulier un rouleau de contrepression (20), présentant un corps de calibrage essentiellement cylindrique creux (32), **caractérisé en ce qu'**aux deux extrémités de celui-ci est chaque fois disposée une protubérance radiale (34a, 34b), qui sont décalées l'une par rapport à l'autre en direction périphérique du cylindre (10, 20, 50), et qui est configuré pour être agencé sur le cylindre (10, 20, 50).

11. Dispositif de calibrage (30) selon la revendication 10, **caractérisé en ce que** les deux protubérances (34a, 34b) sont disposées l'une par rapport à l'autre avec un décalage de 180° ou d'essentiellement 180° l'une par rapport à l'autre en direction périphérique.

12. Dispositif de calibrage (30) selon l'une des revendications 10 à 11, **caractérisé en ce que** les protubérances (34a, 34b) présentent une extension radiale identique ou essentiellement identique, en particulier dans la plage d'environ 0,5 mm à 5 mm.

13. Dispositif de calibrage (30) selon l'une quelconque des revendications 10 à 12, **caractérisé en ce que** la surface des protubérances (34a, 34b) est incurvée.
